# EUROPEAN PATENT APPLICATION

(11) **EP 2 660 134 A1**
(43) Date of publication of application: **06.11.2013**
(21) Application number: 11860311.7
(22) Date of filing: 08.07.2011
(51) Int. Cl.: B62J 17/08, B62K 11/02, B62K 19/00

(54) **CRADLE-TYPE VEHICLE FRAME AND CANOPY STRUCTURE**

(30) Priority: 04.03.2011 CN 201110052250; 08.03.2011 CN 201120058606 U; 08.03.2011 CN 201120058613 U
(71) Applicant: Suzhou Eagle Electric Vehicle Manufacturing Co., Ltd, Suzhou, Jiangsu 215000 (CN)
(72) Inventor: ZHANG, Xueqing, Suzhou Jiangsu 215000 (CN); ZHU, Anding, Suzhou Jiangsu 215000 (CN); LI, Xue, Suzhou Jiangsu 215000 (CN)
(74) Representative: von Kreisler Selting Werner
(86) International application number: PCT/CN2011/001127
(87) International publication number: WO 2012/119276

(57) **Abstract**

Disclosed are a five-point safety belt and a safety belt unlocking mechanism. The safety belt comprises a three-point safety belt, a two-point safety belt, and two locking mechanisms arranged on two sides of a passenger. The three-point safety belt comprises two points arranged at the shoulder and waist on a first side of a passenger, and further comprises a point arranged at the waist on a second side of the passenger. The two-point safety belt comprises a point arranged at the shoulder on the second side of the passenger, and a point arranged at the waist on the first side of the passenger. The unlocking mechanism comprises a safety belt and a safety belt locking mechanism arranged on two sides of a passenger. Each locking mechanism is provided with a button integrally formed therewith for unlocking the safety belt. The unlocking mechanism is also provided with a cable, two ends of the cable are respectively connected to one end of the two buttons for unlocking. A handle is connected to a middle section of the cable. The handle may be arranged in front of the passenger, and the safety belt can be unlocked synchronously through the handle, which can be operated easily.

## Description

### FIELD OF THE INVENTION

The present invention relates to a cradle-type vehicle frame and a canopy structure of an electrical bicycle, and more particularly to an assembling structure thereof.

### BACKGROUND OF THE INVENTION

In order that electrical bicycles can also be used by consumers under adverse weather, electrical bicycles experience new development. For example, the electrical bicycle further adds a canopy structure on top of the vehicle frame for avoiding wind and rain so as to bring greater convenience to the consumers.

The canopy structure may include a bracket and a glass or a awning fabric mounted on the bracket etc. However, the conventional canopy structure is not compact and may include a metal round tube framework, a plastic horizontal beam and a plastic inner plate. The plastic horizontal beam and the plastic inner plate are usually attached to the round tube framework through glue. As a result, the operating process is complex. Besides, the fixation performance is not reliable so that the overall strength of the structure is not enough to meet the demand. Furthermore, the function of the canopy structure is single and cannot meet growing consumer demands.

The conventional electrical bicycle includes a main vehicle frame, a front assembly located at the front of the main vehicle frame and a rear wheel assembly located at the rear of the main vehicle frame. The main vehicle frame usually includes a plurality of metal tubes soldered or fastened together for connecting the front assembly and the rear wheel assembly. The main vehicle frame also undertakes the weight of the vehicle body and the human body. Since the weight capacity and the pressure capacity of the metal tubes is limited, the vehicle frame consisting of such metal tubes is easily broken, which may affect the service life thereof. Besides, the conventional seat of the electrical bicycle usually lacks of a backrest and may bring uncomfortable driving feelings of the driver.

Hence, a new canopy structure and a cradle-type vehicle frame are desired to solve the above problem.

### BRIEF SUMMARY OF THE INVENTION

An object of the present application is to provide a canopy structure with reliable fixation and compact structure, and a cradle-type vehicle frame with comfortable riding feelings.

In order to solve the above technical problems, it is provided according to the present application a canopy structure including a framework and a beam fixed to the framework. The beam includes a metal piece defining a restricting hole. The framework includes a fixing hole. The canopy structure further includes a fixation post extending through the restricting hole and the fixing hole so as to fasten the beam to the framework.

Preferably, the fixation post is a bolt.

Preferably, the canopy structure includes a riveting nut installed in the fixing hole.

Preferably, the beam includes a rear ceiling beam. The framework includes two round tubes spaced apart from each other. The rear ceiling beam bridges the two round tubes.

Preferably, the canopy structure further includes an inner plate surrounding a bottom side of the round tubes and a rear peripheral cover surrounding a top side of the round tubes. Each of the inner plate and the rear peripheral cover includes an inbuilt positioning piece which defines a positioning hole. The riveting nut inwardly contacts the positioning piece of the inner plate. The positioning piece of the inner plate further inwardly contacts the metal piece of the rear ceiling beam. The metal piece of the rear ceiling beam further inwardly contacts the positioning piece of the rear peripheral cover. The bolt extends in turn through the positioning hole of the rear peripheral cover, the restricting hole of the rear ceiling beam, the positioning hole of the inner plate and the riveting nut so as to fasten the framework, the inner plate, the rear ceiling beam and the rear peripheral cover.

Preferably, the beam includes a front ceiling beam defining the restricting hole. The framework includes a front cross-bar. The inner plate includes an inbuilt positioning piece which defines a positioning hole. The front ceiling beam and the inner plate are surrounding a bottom side of the front cross-bar. The bolt extends in turn through the restricting hole of the front ceiling beam, the positioning hole of the inner plate and the riveting nut so as to fasten the front ceiling beam, the inner plate and the front cross-bar together.

Comparing with the prior arts, via the metal piece fixed on the beam according to the present application, it is very convenient for securely fixing the beam to the framework so as to realize overall strong structure of the vehicle body.

In order to solve the above technical problems, it is provided according to the present application a canopy structure including a framework. The framework includes a pair of round tubes spaced apart from each other and located on top of the framework, a connecting member disposed between front ends of the round tubes, and a cross-bar connected between top portions of the round tubes. A front ceiling beam is mounted on the cross-bar and a rear ceiling beam is mounted at the rear of the front ceiling beam. Adhesive strips are disposed upon the round tubes from the rear ceiling beam to front of the round tubes. The adhesive strips and the rear ceiling beam together hold a rear glass in position. The adhesive strips and the front ceiling beam together hold a front glass in position. A front end of the front glass is disposed on top of the connecting member.

Preferably, the framework further includes a pair of handrails respectively connecting the round tubes and positioned outside of the round tubes.

Preferably, the framework further includes a pair of rectangular tubes connected to rear ends of the round tubes.

Preferably, the canopy structure includes an inner plate fixed to the round tubes and disposed between the handrails and the front ceiling beam. The canopy structure further includes a safeguarding portion positioned below the inner plate, the front ceiling beam and the rear ceiling beam.

Preferably, the canopy structure further includes a rear peripheral cover engaging against the inner plate. The rear peripheral cover extends downwardly and covers a rear section of the framework. The rear peripheral cover is fixed to the rear ceiling beam and the round tubes.

Preferably, the canopy structure further includes a first support member mounted at a front of the front glass for installing a windscreen wiper motor.

Preferably, the canopy structure further includes a second support member soldered to the round tubes. The first support member is mounted to the second support member.

Preferably, the second support member includes a pair of V-shaped pieces on opposite ends thereof. The V-shaped pieces lap on and are fixed to the round tubes.

Preferably, the canopy structure further includes a third support member fixed to the rear glass and the cross-bar.

Preferably, the cross-bar includes a pair of fixing portions each defining a mounting hole, and the third support member includes a pair of fixing posts installed in the mounting holes. The rear glass includes a pair of positioning holes and the third support member includes a pair of restricting holes in alignment with the positioning holes, respectively.

Comparing with the prior arts, via the framework mounted with a plurality of components, the canopy structure according to the present application can be provided with overall strong structure, and thereby the canopy structure can be more reliable and more durable.

In order to solve the above technical problems, it is provided according to the present application a cradle-type vehicle frame which includes a support beam, a seat bracket connected to the support beam and a pair of side brackets symmetrically located at opposite sides of the support beam. Each side bracket includes a horizontal lever and a vertical lever essentially perpendicular to the horizontal lever. The horizontal lever is disposed below the support beam and connected to a rear side of the support beam. The vertical lever is perpendicular to the support beam and connected to a front side of the support beam. The seat bracket is fixed to a top rear side of the support beam and includes a bottom bracket and a backrest bracket perpendicular to the bottom bracket.

Preferably, the support beam includes a first support beam and a second support beam located at the same level. Each of the first support beam and the second support beam includes a flat portion, a first bent portion bent from a first end of the flat portion and a second bent portion bent from a second end of the flat portion.

Preferably, the support beam defines a top recess and a cross section of the support beam is notch-shaped.

Preferably, the first bent portion and the second bent portion together with the flat portion of the first support beam form a recess, the first bent portion and the second bent portion together with the flat portion of the second support beam form another recess, and the recess and the another recess open to an exterior along opposite directions.

Preferably, the first bent portions of the first support beam and the second support beam are connected by a connecting beam.

Preferably, the connecting beam is of an arced configuration.

Preferably, the vertical lever is connected to the support beam through a fixing member.

Preferably, the fixing member is triangle and includes a receiving hole for receiving the vertical lever and an extending portion connected to the support beam.

Preferably, a front end of the seat bracket is fixed to a middle portion of the support beam via a pair of first support arms, and a rear end of the seat bracket is fixed to the rear side of the support beam via a pair of second support arms.

Preferably, the second support arms are securely connected to the horizontal levers.

Preferably, the cradle-type vehicle frame includes a foot pedal fixed to the horizontal lever.

Preferably, the foot pedal includes a longitudinal pedal and a plurality of support ribs under the pedal.

Preferably, the foot pedal includes a vertical bent section bent downwardly from a side adjacent to the horizontal lever. A receiving cavity is formed between the bent section and the support ribs for mating with the horizontal lever.

The cradle-type vehicle frame according to the present design makes the driver feel comfortable during driving. Besides, the unique design of the support beam can make the vehicle body much stronger. Furthermore, the fixing member is capable of preventing the vehicle body from being damaged during collision.

### BRIEF DESCRIPTION OF THE DRAWINGS

FIG. 1 is a perspective view of a canopy structure in accordance with an illustrated embodiment of the present invention;

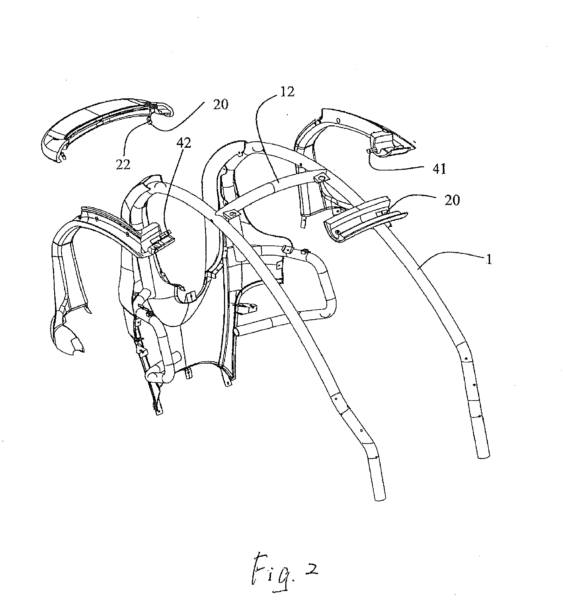

FIG. 2 is an exploded view of the canopy structure in accordance with the illustrated embodiment of the present invention;

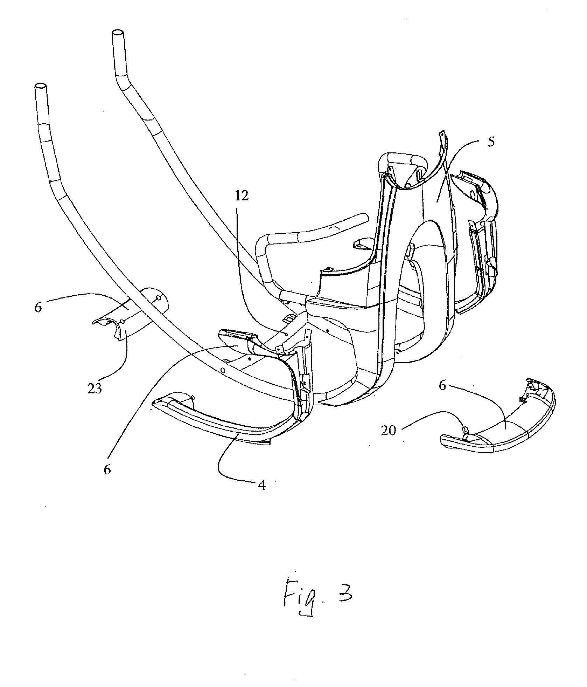

FIG. 3 is another exploded view of the canopy structure in accordance with the illustrated embodiment of the present invention;

FIG. 4 is another perspective view of the canopy structure in accordance with the illustrated embodiment of the present invention;

FIG. 5 is a partly perspective view of the canopy structure in accordance with the illustrated embodiment of the present invention;

FIG. 6 is another exploded view of the canopy structure in accordance with the illustrated embodiment of the present invention;

FIG. 7 is a perspective view of a first support member as shown in FIG. 6;

FIG. 8 is a perspective view of a second support member as shown in FIG. 6;

FIG. 9 is a perspective view of a third support member as shown in FIG. 6;

FIG. 10 is a perspective view of a vehicle frame, a front assembly and a rear wheel assembly assembled together;

FIG. 11 is a perspective view of a cradle-type vehicle frame in accordance with an illustrated embodiment of the present invention;

FIG. 12 is a perspective view of a fixing member in accordance with an illustrated embodiment of the present invention; and

FIG. 13 is a perspective view of a foot pedal in accordance with an illustrated embodiment of the present invention.

### DETAILED DESCRIPTION OF THE PREFERRED EMBODIMENT

In order to better understand the object, the technical solution and the advantages of the present application, the detailed description of the invention referring to the drawings will be described hereinafter.

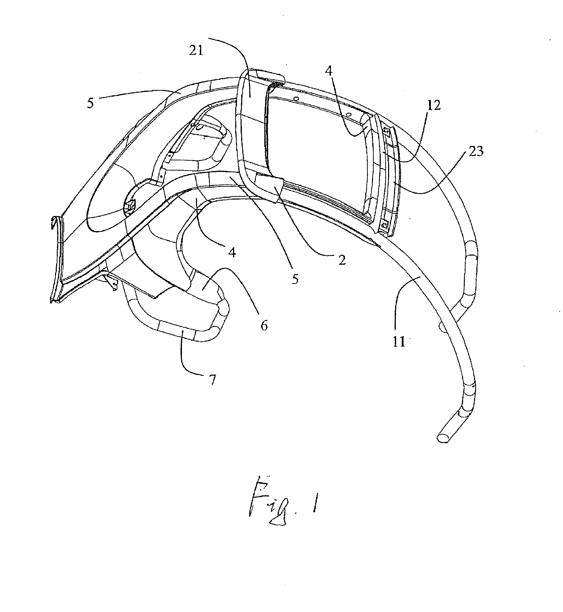

Referring to FIG. 1, the present application discloses a canopy structure which is applied to electrical bicycles. The canopy structure includes a framework 1 and a beam 2 fixed to the framework 1. The beam 2 includes a metal piece 20 defining a restricting hole 22. The framework 1 includes a fixing hole (not labeled). The canopy structure further includes a fixation post which extends through the restricting hole 22 and the fixing hole so as to fasten the beam 2 to the framework 1. The fixation post is a bolt. The canopy structure includes a riveting nut installed in the fixing hole.

The beam 2 includes a rear ceiling beam 21. The framework 1 includes two round tubes 11 spaced apart from each other. The rear ceiling beam 21 bridges the two round tubes 11. The canopy structure further includes an inner plate 4 surrounding a bottom side of the round tubes 11 and a rear peripheral cover 5 surrounding a top side of the round tubes 11. The rear peripheral cover 5 extends downwardly and covers a rear section of the framework 1. The rear peripheral cover 5 engages against the inner plate 4. The rear peripheral cover 5 is fixed to the rear ceiling beam 21 and the round tubes 11. Each of the inner plate 4 and the rear peripheral cover 5 includes an inbuilt positioning piece 41 which defines a positioning hole (not labeled). The riveting nut inwardly contacts the positioning piece 41 of the inner plate 4. The positioning piece 41 of the inner plate 4 further inwardly contacts the metal piece 20 of the rear ceiling beam 21. The metal piece 20 of the rear ceiling beam 21 further inwardly contacts the positioning piece 41 of the rear peripheral cover 5. The bolt extends in turn through the positioning hole of the rear peripheral cover 5, the restricting hole 22 of the rear ceiling beam 21, the positioning hole 42 of the inner plate 4 and the riveting nut so as to fasten the framework 1, the inner plate 4, the rear ceiling beam 21 and the rear peripheral cover 5.

The beam 2 includes a front ceiling beam 23. The framework 1 includes a front cross-bar 12 bridging the round tubes 11. The front ceiling beam 23 and the inner plate 4 are surrounding a bottom side of the front cross-bar 12. The bolt extends in turn through the restricting hole (not labeled) of the front ceiling beam 23, the positioning hole 42 of the inner plate 4 and the riveting nut so as to fasten the front ceiling beam 23, the inner plate 4 and the front cross-bar 12 together.

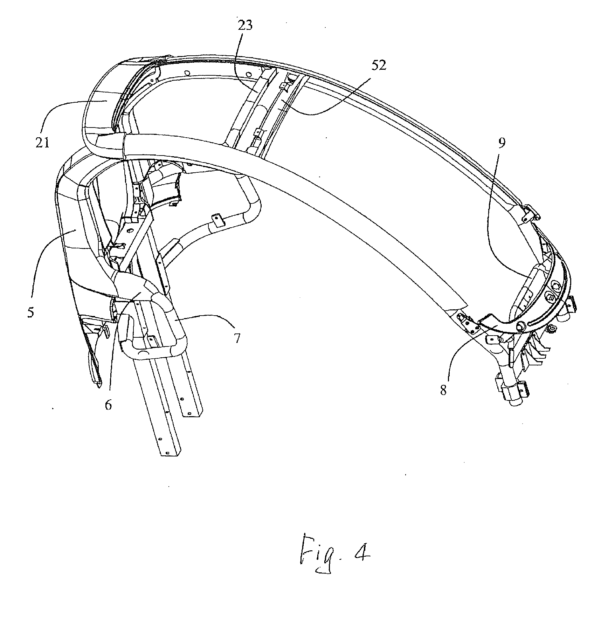

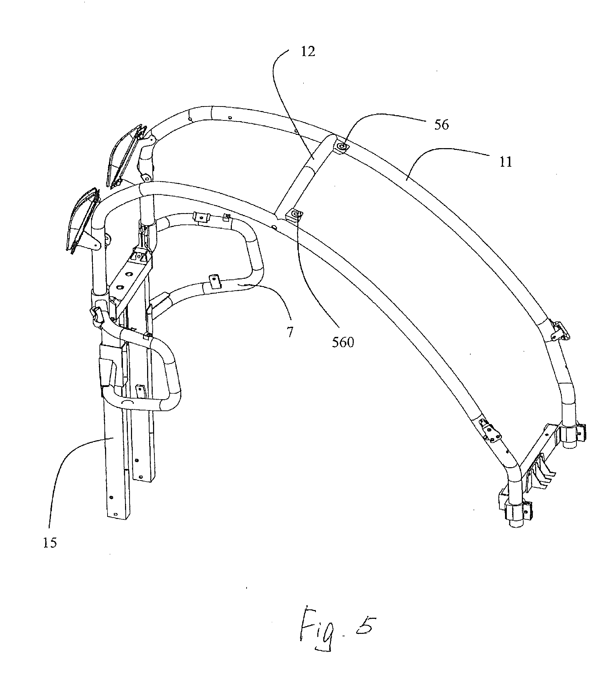

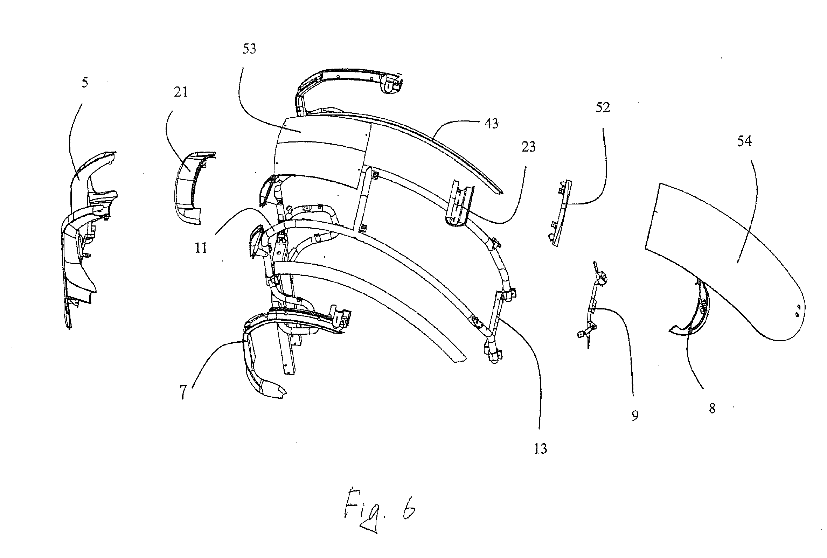

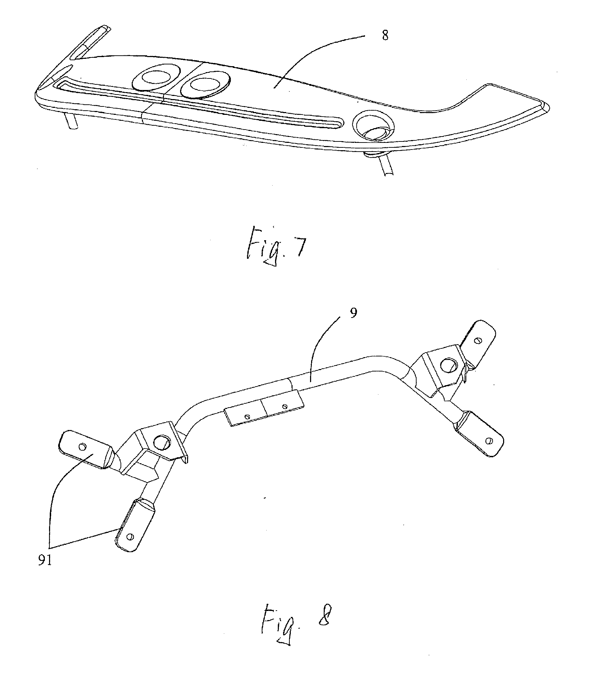

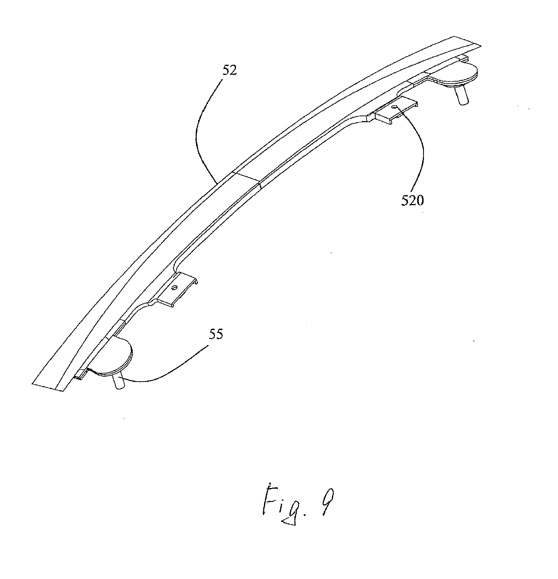

Referring to FIGS. 4 to 9, the framework 1 includes a connecting member 13 disposed between front ends of the round tubes 11, and the cross-bar 12 is connected between top portions of the round tubes 11. The front ceiling beam 23 is mounted on the cross-bar 12. The rear ceiling beam 21 is mounted at the rear of the front ceiling beam 23. Adhesive strips 43 are disposed upon the round tubes 11 from the rear ceiling beam 21 to front of the round tubes 11. The adhesive strips 43 and the rear ceiling beam 21 together hold a rear glass 53 in position. The adhesive strips 43 and the front ceiling beam 23 together hold a front glass 54 in position. A front end of the front glass 54 is disposed on top of the connecting member 13.

The framework 1 includes a pair of handrails 7 respectively connecting the round tubes 11 and positioned outside of the round tubes 11. The framework includes a pair of rectangular tubes 15 connected to rear ends of the round tubes 11. The inner plate 4 is disposed between the handrails 7 and the front ceiling beam 23. The canopy structure further includes a first support member 8 mounted at a front of the front glass 54 for installing a windscreen wiper motor.

The canopy structure further includes a second support member 9 soldered to the round tubes 11. The first support member 8 is mounted to the second support member 9.

The canopy structure further includes a third support member 52 fixed to the rear glass 53 and the cross-bar 12.

The cross-bar 12 includes a pair of fixing portions 56 each defining a mounting hole 560. The third support member 52 includes a pair of fixing posts 55 installed in the mounting holes 560. The rear glass 53 includes a pair of positioning holes and the third support member 52 includes a pair of restricting holes 520 in alignment with the positioning holes, respectively. The second support member 9 includes a pair of V-shaped pieces 91 on opposite ends thereof. The V-shaped pieces 91 lap on and are fixed to the round tubes 11.

The canopy structure further includes a safeguarding portion 6 wherein the outer material of the safeguarding portion 6 is plastic and the inner material of the safeguarding portion 6 is foam material. The safeguarding portion 6 is positioned below the inner plate 4 and installed to the handrails 7. Besides, the safeguarding portion 6 is also positioned below the front ceiling beam 23 and the rear ceiling beam 21. As a result, even if the electrical bicycle falls to the ground, the human body will contact the safeguarding portion 6. Since the safeguarding portion 6 is soft, it is well capable of buffering the human body for avoiding accident injury.

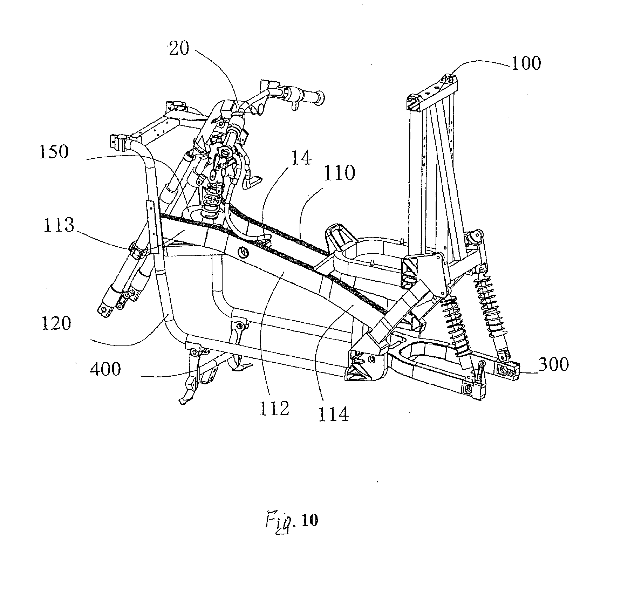

Referring to FIG. 10, the electrical bicycle of the present application further includes a vehicle frame 100, a pair of front and rear wheels (not shown) respectively mounted at front and rear of the vehicle frame 100, a front assembly 20 located at the front of the vehicle frame 100, a rear wheel assembly 300 located at the rear of the vehicle frame 100, and a parking mechanism 400 connected to the vehicle frame 100.

Referring to FIGS. 10 to 12, the vehicle frame 100 is of a cradle-type and includes a pair of support beam 110, a pair of side brackets 120 and a seat bracket 130.

Each support beam 110 is made of a metal material. The support beam 110 includes a first support beam and a second support beam located at the same level. The support beam 110 defines a top recess 111 and a cross section of the support beam 110 is notch-shaped. Each of the first support beam and the second support beam includes a rectangular flat portion 112, a first bent portion 113 bent from a first end of the flat portion 112 and a second bent portion 114 bent from a second end of the flat portion 112. The first bent portion 113 and the second bent portion 114 are located at the same side of the flat portion 112. The first bent portion 113 and the second bent portion 114 together with the flat portion 112 of the first support beam form a recess. The first bent portion 113 and the second bent portion 114 together with the flat portion 112 of the second support beam form another recess. The recess and the another recess open to an exterior along opposite directions. The first bent portions 113 of the first support beam and the second support beam are connected by a connecting beam 150 of an arced configuration.

The pair of side brackets 120 are symmetrically located at opposite sides of the support beam 110. Each side bracket 120 is L-shaped and includes a horizontal lever 121 disposed below the support beam 110 and a vertical lever 122 essentially perpendicular to the horizontal lever 121. The horizontal lever 121 is securely connected to the second bent portion 114 of the support beam 110. The vertical lever 122 is securely connected to the first bent portion 113 of the support beam 110 through a triangle fixing member 16. The seat bracket 130 is fixed to a top rear side of the second bent portions 114 of the support beam 110. The seat bracket 130 includes a bottom bracket 131 for bearing human body and a backrest bracket 132 for resisting against the human back. The backrest bracket 132 is perpendicular to the bottom bracket 131. A front end of the seat bracket 130 is fixed to the flat portions 112 of the support beam 110 via a pair of first support arms 1311, and a rear end of the seat bracket 130 is fixed to the rear side of the support beam 110 via a pair of second support arms 1321.

The cradle-type vehicle frame 100 according to the present design makes the driver feel comfortable during driving. Besides, the notch-shaped metal support beam 110 can make the vehicle body much stronger.

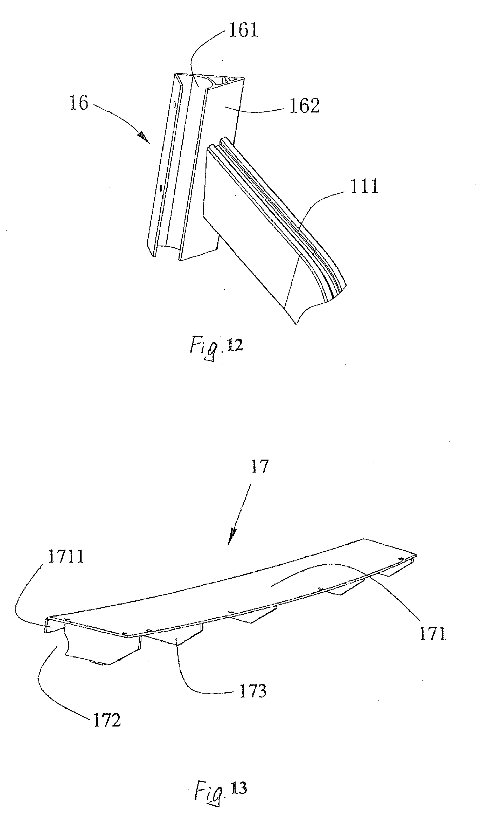

Referring to FIG. 12, the fixing member 16 is used to fix the side brackets 120 and the support beam 110. The fixing member 16 includes a receiving hole 161 for receiving the vertical lever 122 and an extending portion 162 connected to the support beam 110. When the electrical bicycle suffers collision, the collision force may be transferred to the support beam 110 through the fixing member. Since the support beam 110 is strong, it is capable of resisting external force and avoiding large deformation of the electrical bicycle for protecting the driver.

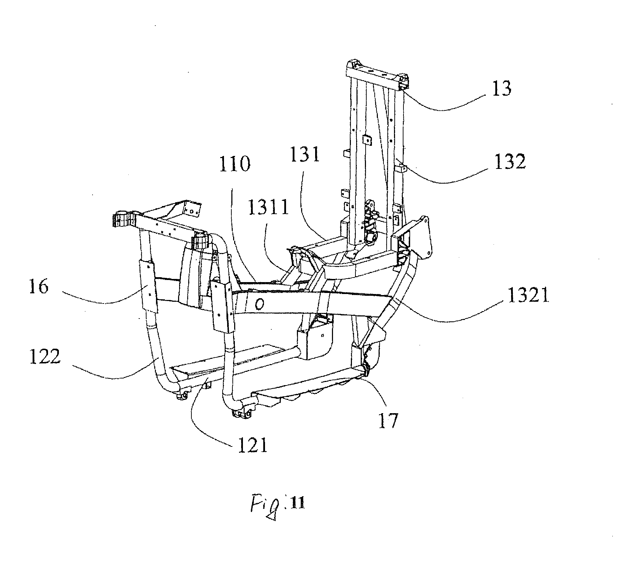

Referring to FIGS. 11 and 13, the cradle-type vehicle frame 100 includes a pair of foot pedals 17 fixed to corresponding horizontal levers 121. Each foot pedal 17 includes a longitudinal pedal 171 and a plurality of support ribs 173 under the pedal 171. The support ribs 173 are parallel to each other and are both perpendicular to the pedal 171 and the horizontal lever 121. The foot pedal 17 includes a vertical bent section 1711 bent downwardly from a side adjacent to the horizontal lever 121. Each support rib 173 defines a circular notch adjacent to the horizontal lever 121 and for mating with the horizontal lever 121. A receiving cavity 172 is formed between the bent section 1711 and the support ribs 173 for mating with the horizontal lever 121.

In conclusion, the description of the above embodiment is only used for the understanding of the present application. It should be noted that, those skilled in the art may make many improvements and modifications to the present application without departing from the principle of the present application, and these improvements and modifications also fall into the protection scope of the claims of the present application.

## Claims

1. A five-point safety belt comprising:
a three-point safety belt provided with two points arranged at a first side of a passenger and a first point arranged at a second side of the passenger, the two points being corresponding to a shoulder and a waist of the passenger, the first point being corresponding to the waist of the passenger;
a two-point safety belt provided with a second point arranged at the second side of the passenger and a third point arranged at the first side of the passenger, the second point being corresponding to the shoulder of the passenger, the third point being corresponding to the waist of the passenger; and
two locking mechanisms arranged at the first side and the second side of the passenger.

2. The five-point safety belt as claimed in claim 1, wherein the three-point safety belt comprises a first locking member positioned between the two points at the first side, the five-point safety belt comprises a first locking mechanism arranged at the second side, and the first locking mechanism is corresponding to the waist of the passenger for locking with the first locking member.

3. The five-point safety belt as claimed in claim 1 or 2, wherein the two-point safety belt comprises a second locking member positioned at a free end thereof, the five-point safety belt comprises a second locking mechanism arranged at the first side, and the second locking mechanism is corresponding to the waist of the passenger for locking with the second locking member.

4. A safety belt unlocking mechanism for unlocking a locking member set on a safety belt from a locking mechanism, comprising:
the locking mechanism comprising a button integrally formed therewith for unlocking the safety belt, the button automatically returning back after unlocking the locking member;
a cable connected to the button; and
a handle connected to cable, distal ends of the cable being connected to the button and the handle, respectively.

5. The safety belt unlocking mechanism as claimed in claim 4, further comprising a first reversion assembly set on the cable for pulling the handle towards a position where the button returns back, when the handle is pulled.

6. The safety belt unlocking mechanism as claimed in claim 5, wherein the first reversion assembly comprises a first sleeve provided with an upper restricting portion and a lower restricting portion, a first sliding member slideable between the upper restricting portion and the lower restricting portion, a first supporting spring mounted between the first sliding member and the lower restricting portion, and an engaging member on top of the first sliding member, the cable extending through the first sliding member and comprising an engaging portion fixed on top of the first sliding member, the engaging member being lockable with the button.

7. The safety belt unlocking mechanism as claimed in claim 6, wherein the engaging member and the first sliding member are integral or twopiece, the engaging portion of the cable being capable of extending through the engaging member.

8. The safety belt unlocking mechanism as claimed in claim 7, wherein an inner side of the first sleeve and the first sliding member comprise a protrusion and a recess along a sliding direction of the first sliding member, the protrusion and the recess being mateable with each other.

9. The safety belt unlocking mechanism as claimed in claim 6, wherein the upper restricting portion comprises a protrusion formed on an inner side of the first sleeve to resist against the first sliding member so as to prevent the first sliding member from continuing sliding.

10. The safety belt unlocking mechanism as claimed in claim 6 or 9, wherein the lower restricting portion comprises an opening for loading the first sliding member and the first supporting spring therein, a first baffle at bottom of the opening and at least one hook, the first sleeve comprising a slit corresponding to a bottom side of the opening, one side of the first baffle being inserted into the slit and the other side of the first baffle being locked by the at least one hook.

11. A safety belt unlocking mechanism comprising:
a safety belt;
two locking mechanisms arranged at two sides of a passenger or lateral sides of two different passengers, each locking mechanism comprising a button integrally formed therewith for unlocking the safety belt;
a cable with two ends thereof connected to the buttons; and
a handle connected to a middle section of the cable.

12. The safety belt unlocking mechanism as claimed in claim 11, wherein the handle is connected to a second sliding member via a connecting cable, the second sliding member comprising a bearing and a pulley mounted to the bearing, the middle section of the cable spooling on the pulley.

13. The safety belt unlocking mechanism as claimed in claim 12, further comprising a second reversion assembly which comprises a second sleeve and a second sliding member slideable in the second sleeve.

14. The safety belt unlocking mechanism as claimed in claim 13, wherein the second reversion assembly comprises a second supporting spring compressed between the second sliding member and the second sleeve.

15. The safety belt unlocking mechanism as claimed in claim 13, wherein the handle is pivotally mounted to an end of the second sleeve, one end of the connecting cable is connected to the second sliding member and the other end of the connecting cable is connected to a middle portion of the handle.

16. The safety belt unlocking mechanism as claimed in any one of claims 11 to 15, further comprising a first reversion assembly between the cable and the button, the first reversion assembly comprising a first sleeve provided with an upper restricting portion and a lower restricting portion, a first sliding member slideable between the upper restricting portion and the lower restricting portion, and a first supporting spring compressed between the first sliding member and the lower restricting portion.

17. The safety belt unlocking mechanism as claimed in claim 16, wherein the lower restricting portion of the first sleeve comprises an opening and a first baffle received in the opening.

18. The safety belt unlocking mechanism as claimed in claim 17, wherein the lower restricting portion comprises a slit and at least one hook, the slit being formed on an inner side of the first sleeve and located adjacent to the opening, one side of the first baffle being inserted into the slit and the other side of the first baffle being locked by the at least one hook.

19. The safety belt unlocking mechanism as claimed in claim 16, wherein the upper restricting portion comprises a protrusion formed on an inner side of the first sleeve.

20. The safety belt unlocking mechanism as claimed in claim 16, further comprising an engaging member on top of the first sliding member and the engaging member is connected to the button.
